# EUROPÄISCHE PATENTSCHRIFT

(11) **EP 3 792 037 B1**
(45) Veröffentlichungstag und Bekanntmachung des Hinweises auf die Patenterteilung: **20.09.2023**
(21) Anmeldenummer: 20193800.8
(22) Anmeldetag: 01.09.2020
(51) Int. Cl.: B29C 55/18, B29C 55/06

(54) **ANPRESSWALZENANORDNUNG, INSBESONDERE FÜR EINE LÄNGSRECKANLAGE SOWIE EINE ZUGEHÖRIGE RECKANLAGE UND EIN VERFAHREN ZUM BETRIEB EINER DERARTIGEN ANPRESSWALZENANORDNUNG**
PRESS ROLLER ASSEMBLY, IN PARTICULAR FOR A STRETCHING SYSTEM AND ASSOCIATED STRETCHING SYSTEM AND A METHOD FOR OPERATING SUCH A PRESS ROLLER ASSEMBLY
DISPOSITIF DES ROULEAUX DE PRESSION, EN PARTICULIER POUR UNE INSTALLATION D'ÉTIREMENT LONGITUDINAL AINSI QU'INSTALLATION D'ÉTIRAGE ASSOCIÉE ET PROCÉDÉ DE FONCTIONNEMENT D'UN TEL DISPOSITIF DE ROULEAUX DE PRESSION

(30) Priorität: 16.09.2019 DE 102019124865
(43) Veröffentlichungstag der Anmeldung: 17.03.2021
(73) Patentinhaber: Brückner Maschinenbau GmbH, 83313 Siegsdorf (DE)
(72) Erfinder: Hacksteiner, Hannes, 5760 Saalfelden (AT); Kreitmair, Jakob, 83313 Siegsdorf (DE)
(74) Vertreter: Flach Bauer & Partner Patentanwälte mbB

(56) Entgegenhaltungen:
- EP-A2- 0 747 199
- EP-A2- 0 779 144
- EP-B1- 0 747 199
- DE-U1- 20 103 183

## Beschreibung

Die Erfindung betrifft eine Anpresswalzenanordnung, insbesondere für eine Längsreckanlage sowie eine zugehörige Reckanlage und ein Verfahren zum Betrieb einer derartigen Anpresswalzenanordnung.

Anpress- oder Nipwalzen können in unterschiedlichen technischen Bereichen eingesetzt werden. Besondere Bedeutung haben sie bei der Folienherstellung, und zwar dort insbesondere im Bereich der Längsreckung. Dabei werden Anpresswalzen ganz allgemein dort eingesetzt, wo folienartige Materialbahnen über Walzen hinweg fortbewegt werden und dabei diese fortbewegte Materialbahn unter Verwendung einer so genannten Anpress- oder Nipwalze auf die Mantelfläche einer damit zusammenwirkenden Walze angepresst werden sollen, die im Folgenden auch als Umlenk- oder Prozesswalze bezeichnet werden soll.

Bei Kunststofffolien-Längsreckwerken wird eine Längsreckung des Films zwischen aufeinanderfolgende Walzen durchgeführt, wobei jeweils eine nachfolgende Walze mit höherer Rotationsgeschwindigkeit oder Umlaufgeschwindigkeit des Walzenmantels dreht, als die vorausgegangene Walze. Dadurch kommt es zu einer Längsreckung des Films im Spalt zwischen diesen beiden aufeinanderfolgenden Walzen.

Um ein sauberes Anliegen des Films an der jeweiligen Prozess- oder Umlenkwalze zu garantieren, werden die erwähnten Anpress- oder Nipwalzen verwendet, um die bewegte Materialbahn, insbesondere einen zu reckenden Kunststofffolienfilm, vollflächig auf den Mantel einer Umlenk- oder Prozesswalze anzudrücken.

Bei der Herstellung von Batterie-Separator-Folien (nachfolgend auch kurz als BSF-Folien abgekürzt benannt) wird häufig ein so genannter WET-Prozess eingesetzt, bei welchem Öl mit dem Kunststofffolienmaterial (häufig Polyethylen) vermischt und dann zu einer Folie extrudiert wird.

Diese Folie wird dann in weiteren Arbeitsschritten entweder durch eine Simultanreckanlage oder aber durch eine sequentielle Reckanlage in Längsrichtung und in einer anderen Stufe in Breitenrichtung gereckt.

Bei der Verstreckung in Längsrichtung wird die zu reckende Folie, um diese auf entsprechende Recktemperatur zu bringen, über beheizte Walzen geführt und dadurch erwärmt. Durch die erwähnte höhere Walzengeschwindigkeit einer jeweils nachfolgenden Walze wird dann die Längsreckung bewirkt, also in der so genannten Längsreckrichtung, die auch kurz als MD-Richtung abgekürzt wird.

Um eine gleichbleibende Erwärmung bzw. Verstreckung der Folie zu erreichen, muss die Folie gleichmäßig ohne Einschlüsse von Luft auf den Walzen bzw. Walzenmantel einer Umlenk- oder Prozesswalze aufgelegt werden. Um das zu erreichen werden die erwähnten Anpresswalzen verwendet, die auch als Nipwalzen oder Nip Rolls bezeichnet werden.

Diese Anpress- oder Nipwalzen drücken also die Folie leicht gegen die Umlenk- oder Prozesswalze.

Das Problematische in diesem Prozess ist, dass die Anpress- bzw. Nipwalze nicht zu fest gegen die Folie drücken darf, die also in dem Walzenspalt zwischen einer Anpress- oder Nipwalze zum einen und dem Walzenmantel einer Umlenk- oder Prozesswalze zum anderen hindurchgeführt wird. Bei der Herstellung eines (BSF-)Films in einer Längsreckmaschine (MDO) umschließt in den der Längsreckmaschine vorgeschalteten Prozessschritten ein Ölfilm die Folie, wodurch es dazu kommen kann, dass die Folie (die zwischen der Umlenk- oder Prozesswalze und der nicht mitdrehenden, also stehenden Anpress- oder Nipwalze hindurchbewegt wird) an der Anpress- oder Nipwalze schleift. Dadurch können unerwünschte Kratzer oder Defekte auf der Folienoberfläche entstehen.

Aus der Vorveröffentlichung EP 0 779 144 A2 ist ein Verfahren zur Längsstreckung bei der Herstellung orientierte Polypropylenfolien als bekannt zu entnehmen. Dabei werden Walzenpaare eingesetzt, die eine erste angetriebene Walze und eine damit zusammenwirkenden Nipwalze umfassen, zwischen denen ein Kunststofffilm hindurchgeführt wird. Der Antrieb der zusammenwirkenden einzelnen Walzen des Walzenpaares kann dabei separat erfolgen, wobei auch ein gemeinsamer Antrieb der beiden Walzen des Walzenpaares möglich ist. In dem einen Fall können die Walzenpaare Randbereiche aufweisen, auf denen die beiden Walzen miteinander abrollen können. Im anderen Fall kann die Nipwalze separat angetrieben sein.

Eine ähnliche Anordnung ist grundsätzlich auch aus der EP 0 747 199 A2 bekannt geworden. Auch im Rahmen dieser Vorveröffentlichung werden zwei zusammenwirkende Walzen beschrieben, nämlich eine erste Walze und eine Nipwalze, zwischen denen hindurch ein bandförmiges Material hindurchläuft. Beide Walzen können dabei jeweils über einen eigenen Antrieb verfügen.

Aufgabe der vorliegenden Erfindung ist es eine verbesserte Lösung für eine Anpress- oder Nipwalze insbesondere für eine Längsreckanlage (also eine sog. MDO = Machine Direction Orienter) zu schaffen, also eine Anpresswalzenanordnung, die ein Walzenpaar bevorzugt mit einer Anpress- oder Nipwalze und einer zusätzlichen Walze umfasst.

Die Aufgabe wird bezüglich der Anpresswalzenanordnung entsprechend den im Anspruch 1 angegebenen Merkmalen und bezüglich der Reckanlage gemäß Anspruch 11 gelöst. Vorteilhafte Ausgestaltungen der Erfindung sind in den Unteransprüchen angegeben.

Die Erfindung geht also von der Erkenntnis aus, dass bei der Herstellung und/oder Verarbeitung von bewegten Materialbahnen, insbesondere Folien oder Kunststofffolien, vor allem bei der Herstellung von Batterie-Separator-Folien durch den ölhaltigen Film verhindert wird, dass die entsprechenden Anpress- oder Nipwalzen beim Anlegen dieses Filmes an die Walzenoberfläche einer Umlenk- oder Prozesswalze nicht mit dieser mitdrehen bzw. nicht mit dem im Walzenspalt hindurch geführten Film mit in Rotation versetzt werden. Dadurch werden die erwähnten unerwünschten Foliendefekte verursacht.

Es könnte nunmehr daran gedacht werden, die Anpress- oder Nipwalzen mit höherem Anpressdruck an den mit Ihnen zusammenwirkenden Umlenk- oder Prozesswalzen anzudrücken. Dadurch wird die zwischen den Walzen hindurch geführte Folie mit höherem Druck beaufschlagt. Dies hat allerdings zur Folge, dass die Folieneigenschaften negativ beeinflusst werden.

Von daher ist auch schon daran gedacht worden die Oberfläche der Anpress- bzw. Nipwalzen mit bestimmten Mustern zu versehen, die ein Rutschen der Walzenoberfläche gegenüber dem ölhaltigen Film (ähnlich einem Aquaplaning-Effekt) vermeiden sollten. Allerdings haben sich diese auf der Oberfläche der Anpress- oder Nipwalzen ausgebildeten Muster dann tatsächlich auf der Filmoberfläche abgebildet, was ebenfalls vermieden werden sollte da dies auch negative Effekte bzgl. der Folieneigenschaften erzeugt.

Die Erfindung geht dabei von einer Anpresswalzenanordnung aus, der ein Antrieb zugeordnet ist. Durch Realisierung einer angetriebenen Anpresswalze wird es letztlich möglich, dass die Mantel-Umlaufgeschwindigkeit der Anpress- oder Nipwalze annähernd gleich ist zu der Mantel-Umlaufgeschwindigkeit der Umlenk- oder Prozesswalze. Mit anderen Worten lassen sich durch Verwendung einer angetriebenen Anpresswalze die Mantelumlaufgeschwindigkeiten der beiden jeweils zusammenwirkenden Walzen zumindest annähernd synchronisieren. Dadurch werden die im Stand der Technik auftretenden Nachteile vermieden.

Dabei ist im Rahmen der Erfindung ein spezifischer Direktantrieb für die Anpress- oder Nipwalze vorgesehen.

Bei der erfindungsgemäßen Realisierung des Direktantriebes für die Anpress- und Nipwalze ist diese über einen Stirnseitenbereich der eigentlichen Anpress- und Nipwalze einsetzbar, d.h. dort eingebaut. Die gesamte Antriebseinheit ist so konzipiert, dass sie nur über eine Teillänge von (bevorzugt deutlich) weniger als 50 % oder 40 % stirnseitig über den eigentlichen Walzenkörper der Anpress- bzw. Nipwalze übersteht. In dem überstehenden Bereich ist bevorzugt der Antriebsmotor noch in einer Teillänge untergebracht. Die Abtriebswelle des Antriebsmotors sowie eine nachfolgende Getriebeanordnung vorzugsweise in Form eines Planetengetriebes sind z.B. über eine optional vorgesehene nachfolgende Kupplungsanordnung mit einem Radialantriebselement und mit einer axial zur Stirnseite der Walze zurücklaufenden Koppeleinrichtung mit anschließendem Stirnseitenring in fester Drehverbindung mit dem Walzenkörper der Anpress- oder Nipwalze verbunden. Die ganze Anordnung wird über einen stirnseitig außen vorstehenden und dabei feststehenden Teil gehalten.

Bevorzugt bildet dabei diese Antriebseinheit mit dem Antriebsmotor das so genannte Festlager. An der gegenüberliegenden Stirnseite der Anpress- bzw. Nipwalze ist bevorzugt ein Dummy eingefügt, der von seiner Abmessung und Größe ähnlich zu der erwähnten Antriebseinheit ausgebildet sein kann. Dieser der Abstützung des Nip- und Anpresswalzenkörpers dienende Dummy bildet bevorzugt dann das so genannte Loslager.

Mit anderen Worten wird dadurch die Anpress- und Nipwalze nicht durch einen die Anpress- und Nipwalze durchgängig durchsetzenden Tragkörper getragen, sondern nur durch Zentralabschnitte in Form eines Festlagers und Loslagers, die die gesamte hohle Zentralachse der Anpress- und Nipwalze nur in einer Teillänge eingreifen.

Die entsprechende Antriebseinheit lässt sich dabei problemlos ein- und ausbauen.

Die Erfindung wird nachfolgend anhand von Zeichnungen näher erläutert. Dabei zeigen im Einzelnen
- Figur 1:: eine schematische Seitenansicht einer Längsreckanlage bzw. eines Ausschnittes einer Längsreckanlage;
- Figur 2:: eine schematische Seitenansicht einer nicht zur Erfindung gehörenden Anpress- oder Nipwalze;
- Figur 3:: eine Stirnseitenansicht auf das Beispiel gemäß Figur 2;
- Figur 4:: eine Darstellung vergleichbar der Seitenansicht gemäß Figur 2 im größeren Detail;
- Figur 5a:: eine schematische auszugsweise Längsschnittdarstellung durch den Stirnseitenbereich der nicht zur Erfindung gehörenden Anpresswalze und einer daran montierten Hülse gemäß einer ersten Ausführungsvariante;
- Figur 5b:: eine schematische auszugsweise Längsschnittdarstellung durch den Stirnseitenbereich der nicht zu Erfindung gehörenden Anpresswalze und einer daran montierten Hülse gemäß einer zu Figur 5a abgewandelten Ausführungsvariante;
- Figur 6a und 6b:: zwei räumliche Darstellungen der im Zusammenhang mit der Anpresswalze nach den nicht zu Erfindung gehörenden Beispielen gemäß Figur 5a bzw. 5b verwendeten Hülsen;
- Figur 7:: eine schematische auszugsweise Stirnseitenansicht auf eine Anpresswalze mit stirnseitiger Öffnung vor dem Einsetzen eines Direktantriebs oder Dummys;
- Figur 8:: eine räumliche Darstellung eines erfindungsgemäßen Direktantriebs;
- Figur 9:: einen stirnseitigen Ausschnitt der Anpresswalze in räumlicher Darstellung vergleichbar Figur 7, wenn der in Figur 8 gezeigte Direktantrieb am stirnseitigen Ende dieses Walzenkörpers eingesetzt ist;
- Figur 10:: eine auszugsweise Axialschnittdarstellung durch den Walzenköper mit dem dort eingesetzten Direktantrieb, der für größere Walzendurchmesser besonders geeignet ist,
- Figur 11:: eine auszugsweise Längsschnittdarstellung durch den Walzenkörper (unter Weglassung eines mittleren Abschnitts des Walzenköpers) unter Darstellung des Direktantriebs auf einer Seite in einer gegenüber Figur 10 geänderten Ausführungsform und eines eingesetzten Dummys an der gegenüberliegenden Stirnseite; und
- Figur 12:: eine ähnliche Darstellung zu Figur 11, die eine Axialschnittdarstellung durch den Walzenköper mit einem dort eingesetzten Direktantrieb zeigt, der wie bei der Variante nach Figur 11 für kleinere Walzendurchmesser besonders geeignet ist.

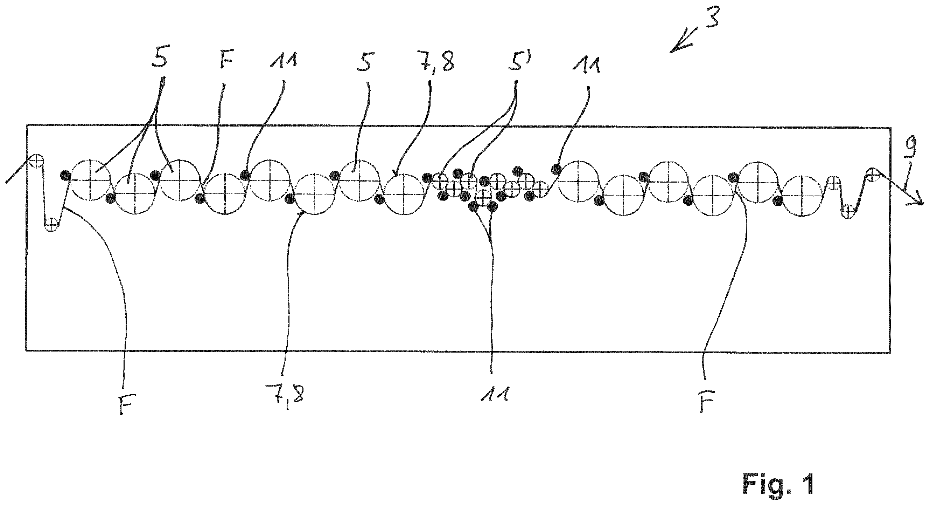

Anhand der Figuren 1 bis 6 ist ein nicht zu Erfindung gehörendes Beispiel eine Nipwalze gezeigt und beschrieben. Dabei ist in Figur 1 in schematischer Darstellung in Seitenansicht eine Längsreckanlage 3 mit einer Vielzahl von Walzen 5 gezeigt, die nachfolgend auch als Umlenk- und/oder Prozesswalzen bezeichnet werden. Anstelle von Längsreckanlage 3 kann ebenso auch von einem Längsreckwerk 3 oder einer Längsreckmaschine 3 gesprochen werden.

Bei der Darstellung gemäß Figur 1 ist üblicherweise linksliegend ein Extruder zur Aufbereitung des Kunststofffolien-Filmmaterials vorgesehen, welcher eine Schmelze in der Regel über eine Breitschlitzdüse auf eine in einem Wasserbad rotierende Kühlwalze abgibt. Es könnte aber auch gar kein Wasserbad vorhanden sein. Ferner ist aber auch ein Bad mit einer beliebigen Kühlflüssigkeit (z.B. Lösemittel, oder jegliche Gemische) möglich. Beschränkungen auf eine bestimmte Kühlmethode bestehen insoweit also nicht.

Der in der Regel dadurch verfestigte und/oder auskristallisierte Film wird dann in Figur 1 linksliegend der Längsreckanlage 3 zugeführt und verläuft dann mäanderförmig über eine Vielzahl von Walzen 5 hinweg, bevor er das Längsreckwerk rechtsliegend in Figur 1 verlässt. Der Film wird dort - wenn er noch in Querrichtung ergänzend gereckt werden soll - dann einem Querreckwerk (TDO) zugeführt. Es wird insoweit wie bei der Erzeugung des Schmelzefilms auf die vorbekannten Einrichtungen und Anlagen verwiesen.

In dem Längsreckwerk verläuft der Film F jeweils in einem Teilumschlingungswinkel um die erwähnten Walzen 5 herum, wobei er in diesem Umschlingungswinkel dann auf der entsprechenden Walzenoberfläche 7 bzw. den Walzenmantel 8 aufliegt, um mit entsprechender Mantel-Umlaufgeschwindigkeit fortbewegt zu werden.

Zwischen zwei aufeinanderfolgenden Walzen kann dann jeweils ein Längsrecken dadurch bewirkt werden, dass eine in Abzugsrichtung 9 nachfolgende Walze 5 gegenüber einer vorausgegangenen Walze 5 mit höherer Mantelumlaufgeschwindigkeit angetrieben wird, so dass in dem freien Abschnitt zwischen zwei aufeinander folgenden Walzen dann die Längsreckung der durch die Anlage hindurch bewegten Materialbahn bewirkt wird, wobei dies beispielhaft für einen Kunststofffilm oder kurz Film F genannt erläutert wird.

Die einzelnen Walzen 5 werden dabei auf die jeweils optimale Temperatur erwärmt, um den Film selbst auf optimale Recktemperatur zu bringen und diese zu erhalten.

Bei dem Verfahren muss sichergestellt werden, dass der Film gleichmäßig und ohne Einschlüsse von Luft auf die Walzen, d.h. die Walzenoberfläche 7 bzw. den Walzenmantel 8 der Walzen 5 aufgelegt bzw. angelegt wird.

Dafür sind in dem Längsreckwerk 3 eine Vielzahl von Anpresswalzen 11 vorgesehen, die nachfolgend teilweise auch als Nipwalzen oder Niprollen bezeichnet werden. In Figur 1 sind die Walzen oder Reckwalzen 5 sehr viel größer dimensioniert und entsprechend dargestellt als die Anpresswalzen 11, die im Querschnitt vollflächig schwarz wiedergegeben sind.

Dabei sind in einem Zwischenbereich des Längsreckwerks 3 auch Walzen oder Reckwalzen 5' mit geringeren Walzendurchmesser vorgesehen. Zum Teil sind sogar pro Walze oder Reckwalze 5' zwei Anpresswalzen 11 vorgesehen, nämlich einmal beim Anlegen des Films auf der Walzenoberfläche einer derartigen Walze 5' und zum anderen im Bereich des Abhebens von dieser Walzenoberfläche.

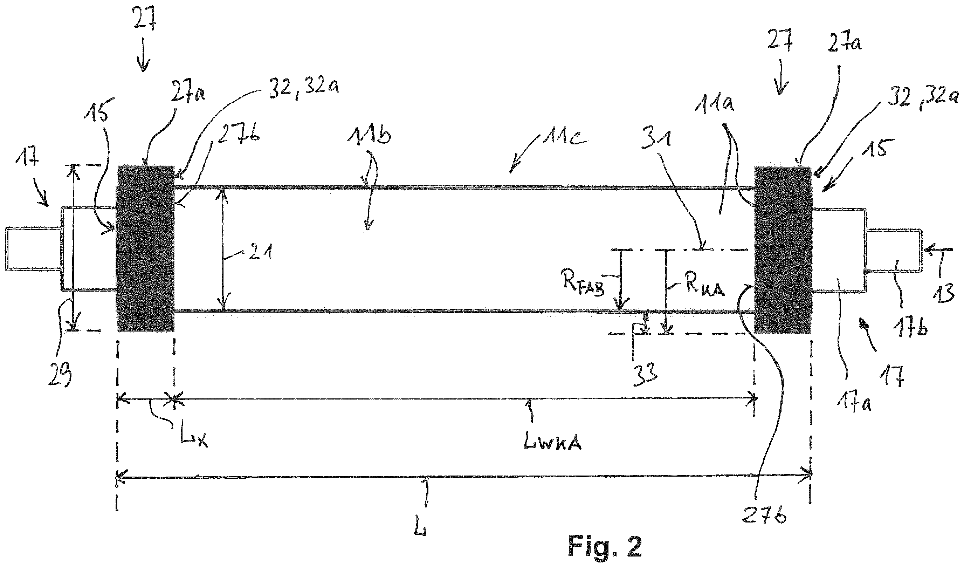

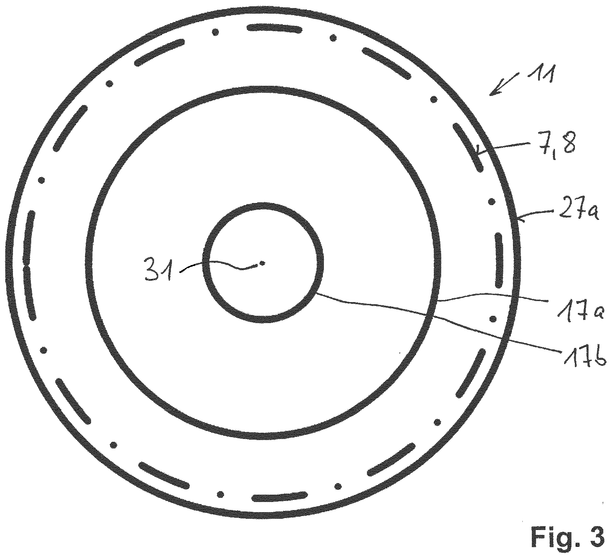

Anhand von Figur 2 ist in schematischer Seitenansicht (also quer zur axialen Längserstreckung) ein erstes Beispiel einer Anpresswalzenanordnung mit einer nicht zur Erfindung gehörenden Anpress- oder Nipwalze 11 gezeigt. In Figur 3 ist eine entsprechende axiale Ansicht gemäß dem Pfeil 13 in Figur 2 wiedergegeben. Die Anpresswalze 11 weist insgesamt eine axiale Länge L auf.

An den so gebildeten gegenüberliegenden Stirnseitenbereichen 15 kann beispielsweise noch ein im gezeigten Beispiel über die axiale Länge L der eigentlichen Anpresswalze 11 überstehender abgestufter Achsstummel 17, der z.B. mit zwei Stummelabschnitten 17a und 17b ausgebildet ist oder sein kann, die gegenüber den eigentlichen Anpresswalzen-Durchmesser 21 einen abgestuft geringeren Durchmesser aufweisen.

Im gezeigten Beispiel gemäß der Seitendarstellung nach Figur 2 umfasst die Anpresswalzenanordnung die Anpresswalze 11 mit dem in der Regel vorgesehenen Achsstummel 17 (unabhängig von dessen Ausbildung, ob dieser Achsstummel 17 einfach oder mehrfach abgestuft ist), wobei die Anpresswalze 11 einen Walzenkörper 11a oder Walzenkörperabschnitt 11a mit einer Walzenoberfläche 11b aufweist. Ferner weist die Anpresswalze 11 einen eigentlichen Nipwalzen-Folienandrückbereich 11c auf, an den sich im gezeigten Beispiel in Axialrichtung versetzt liegend, also gegenüberliegend jeweils ein Kontakt- und/oder Antriebsabschnitt 27 mit einer im Verhältnis zur Gesamtlänge L der Anpresswalze 11 kurzen axialen Länge L_{X} anschließt. Bei diesem Beispiel erstreckt sich der Nipwalzen-Folienandrückbereich 11c zumindest in einer Teillänge L_{WKA}.

Diese beiden Kontakt- und/oder Antriebsabschnitte 27 weisen einen Durchmesser 29 auf, der in unbelasteten Zustand größer ist als der Durchmesser 21 der Anpresswalze 11 in dem Walzenabschnitt zwischen den beiden entfernt zueinander liegenden Kontakt- und/oder Antriebsabschnitten 27.

Bei der Stirnseitenansicht gemäß Figur 3 ist konzentrisch zur zentralen verlaufenden Rotations- oder Zentralachse 31strichpunktiert der hinter dem Walzenabschnitt 27 liegende Walzenmantel 8, d.h. die Walzenoberfläche 7 eingezeichnet.

Mit anderen Worten ergibt sich dadurch eine Differenz 33 (siehe Figur 2), die ein Unterschiedsmaß zwischen dem Radius R_{FAB} in dem Nipwalzen-Folienandrückbereich 11c (also in dem Bereich, der zwischen den beiden Kontakt- und/oder Antriebsabschnitten 27 liegt) und dem Radius R_{KA} im Bereich der Kontakt- und/oder Antriebsabschnitte 27ergibt.

Die Walzenabschnitte 27 sind dabei aus einem komprimierbaren Material 32 gebildet und umfassen in einem umlaufenden Bereich, also einer Mantelschicht oder Mantellage 32a ein komprimierbares Material zumindest mit entsprechender Dicke, welches vorzugsweise elastisch komprimierbar ist wie beispielsweise Gummi oder ein gummiähnlicher Stoff, beispielsweise Silikon. Auf die Bedeutung dieses Materials wird nachfolgend noch eingegangen.

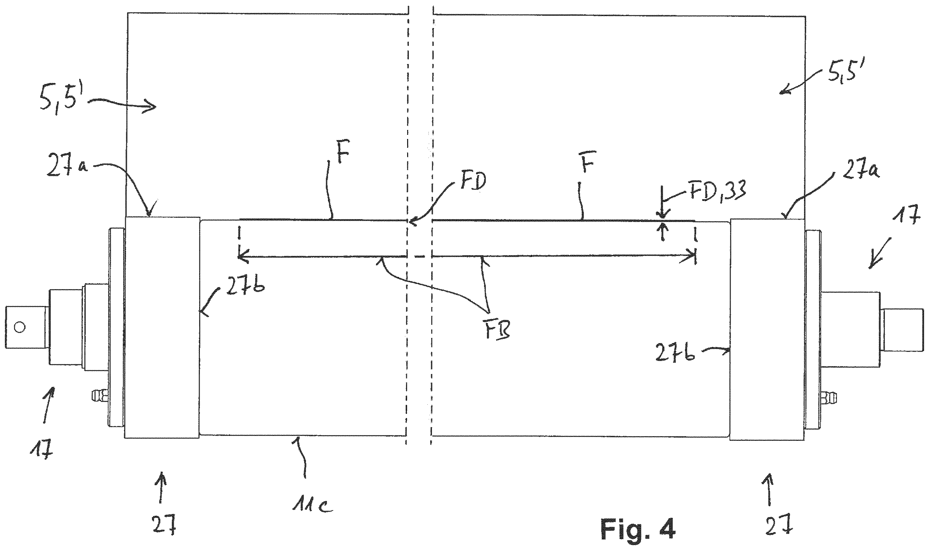

In der Praxis werden die erwähnten Anpress- oder Nipwalzen 11 durch geeignete Winkel-Einstelleinrichtungen verstellt und/oder durch geeignete Einstelleinrichtungen an die Oberfläche einer damit zusammenarbeitenden Umlenk- oder Prozesswalze 5, 5' herangeführt, und zwar unter Ausbildung eines Walzenspaltes 34 (siehe auch Figur 4) zwischen der Walzenoberfläche 7 einer Walze 5, 5' und der Walzenoberfläche 11b einer Anpress- oder Nipwalze 11.

Da der Durchmesser der Anpresswalze 11 im Bereich des Kontakt- und/oder Antriebsabschnitts 27 größer ist als in dem dazwischenliegenden Bereich, kommt also - da die Anpress- oder Nipwalze 11 zu der Walze 5 oder 5' parallel zueinander ausgerichtet sind - beim seitlichen Heranführen unter Verringerung des Seitenabstandes also zunächst der Außenumfang oder die Oberfläche 27a der beiden Kontakt- und/oder Antriebsabschnitte 27 zuerst in Kontakt mit der Walzenoberfläche 7 bzw. dem Walzenmantel 8 der zur Anpresswalze 11 parallel ausgerichteten Umlenk- oder Prozesswalze 5 bzw. 5'. Zu diesem Zeitpunkt ist die erwähnte Radius-Differenz 33 zwischen dem Außenumfang 27a des Kontakt- und/oder Antriebsabschnitts 27 und der Walzenoberfläche 11b im Folienandrückbereich 11c größer als die Dicke der in dem Walzenspalt 34 hindurch geführten Materialbahn oder dem hier hindurchgeführten Film F. Von daher kann zu diesem Zeitpunkt die Anpresswalze in ihrem Nipwalzen-Folienanpressbereich 11c noch keinen Druck auf die Materialbahn oder den Film F ausüben.

Durch Erhöhung des Anpressdruckes der Kontakt- und/oder Antriebsabschnitte 27 auf die Walze 5, 5' wird das vorzugsweise elastomere und insoweit komprimierbare Material des jeweiligen Kontakt- und/oder Antriebsabschnitts 27 mehr und mehr zusammengepresst und dabei der Walzenspalt 34 zwischen der Anpresswalze 11 und der erläuterten Umlenk- oder Prozesswalze 5, 5' verringert, bis die Anpresswalze 11 in dem Nipwalzen-Folienandrückbereich 11c zwischen den Kontakt- und/oder Antriebsabschnitten 27 mit ihrer Walzenoberfläche 11b den in dem Walzenspalt hindurchgeführten Film berührt und mit der gewünschten Anlegekraft an die Oberfläche der Walze 5 bzw. 5' andrückt. Da aber wie erläutert die Anpress- oder Nipwalze 11 zunächst im Bereich ihrer Kontakt- und/oder Antriebsabschnitte 27 in Kontakt kommt mit der rotierenden Umlenk- oder Prozesswalze 5, wird durch die vorhandene Reibung zwischen der Walzenoberfläche 7 der Walze 5, 5' und den Kontakt- und/oder Antriebsabschnitten 27 die Anpress- und Nipwalze 11 von ihrer stehenden (also nicht rotierenden) Ausgangslage zunehmend mehr und schneller in Rotation versetzt, bis letztlich beide zusammenwirkenden Walzen synchron drehen, also mit gleichen Mantel-Umlaufgeschwindigkeiten. Bevorzugt erst dann, wenn diese Umlaufgeschwindigkeiten synchron sind, also gleich sind, soll das elastische Material in den Kontakt- und/oder Antriebsabschnitten 27 so stark komprimiert sein, dass der reale durch Kompression minimierte Radius R_{KA} ein Maß aufweist, welches der Summe aus dem Radius R_{FAB} im Bereich des Folienandrückbereichs 11c (zwischen den Kontakt- und/oder Antriebsabschnitten 27) plus der Filmdicke FD entspricht, wie sich dies aus der schematischen Draufsicht insbesondere gemäß Figur 4 ergibt.

Dadurch wird ein indirekter Antrieb für die Anpresswalze 11 realisiert, nämlich nicht unter Verwendung eines eigenen Direktantriebes, sondern über die Rotation der mit der Anpresswalze 11 zusammenwirkenden Walze 5. Und dieser indirekte Antrieb wird wirksam auch dann realisiert, wenn die Walzenoberfläche 11b und/oder der Folienandrückbereich 11c es Walzenkörpers 11a völlig glattgeschliffen ist.

Wie sich dabei aus Figur 4 auch ergibt, ist die Folienbreite FB um mindestens 1 %, vorzugsweise mindestens 5 % oder um zumindest 7,5 % oder zumindest 10 % schmäler als der lichte Abstand zwischen den aufeinander zu weisenden Seiten 27b der Kontakt- und/oder Antriebsabschnitte 27. In diesem lichten Abstand wird letztlich quasi die Materialbahn oder der Film F geführt, so dass auch ölhaltige Materialbahnen oder Filme F nicht oder nicht so leicht auf der Oberfläche der Walze 5 in Axialrichtung verrutschen können.

Es wird ferner angemerkt, dass das komprimierbare Material im Bereich des zumindest einen Kontakt- und Antriebsabschnitts 27 unter Druck so weit komprimierbar ist,
a) dass der Durchmesser des zumindest einen Kontakt- und Antriebsabschnitts 27 dem Durchmesser der Anpresswalze 11 in dem Nipwalzen-Folienandrückbereich 11c entspricht oder um weniger als 5 % oder weniger als 4 %, 3 %, 2 %, 1 % oder 0,5 % größer ist als der Durchmesser der Anpresswalze 11 im Nipwalzen-Folienandrückbereich 11c, oder
b) dass der Durchmesser des zumindest einen Kontakt- und Antriebsabschnitts 27 um die Dicke des im Nipwalzen-Folienandrückbereich 11c entlangzuführenden Kunststofffilms F größer ist als der Durchmesser der Anpresswalze 11 im Nipwalzen-Folienandrückbereich 11c.

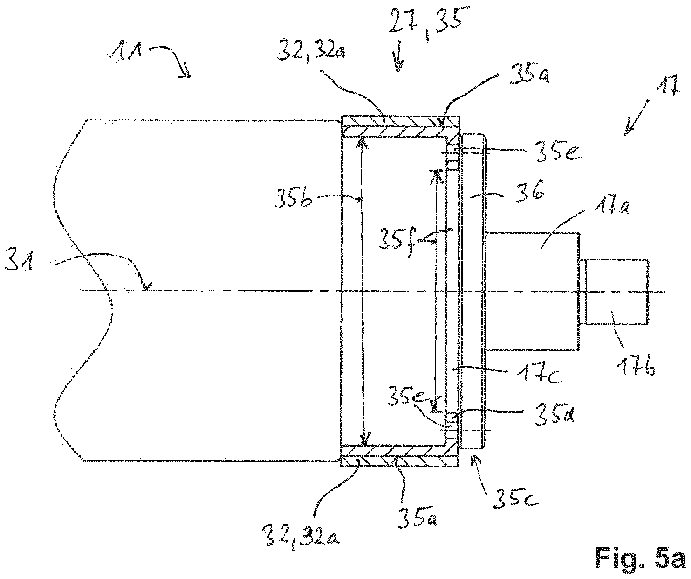

Nachfolgend wird auf die Figuren 5a bis 6b verwiesen, in denen zwei abgewandelte Umsetzungen der nicht zur Erfindung gehörenden Lösung gezeigt sind.

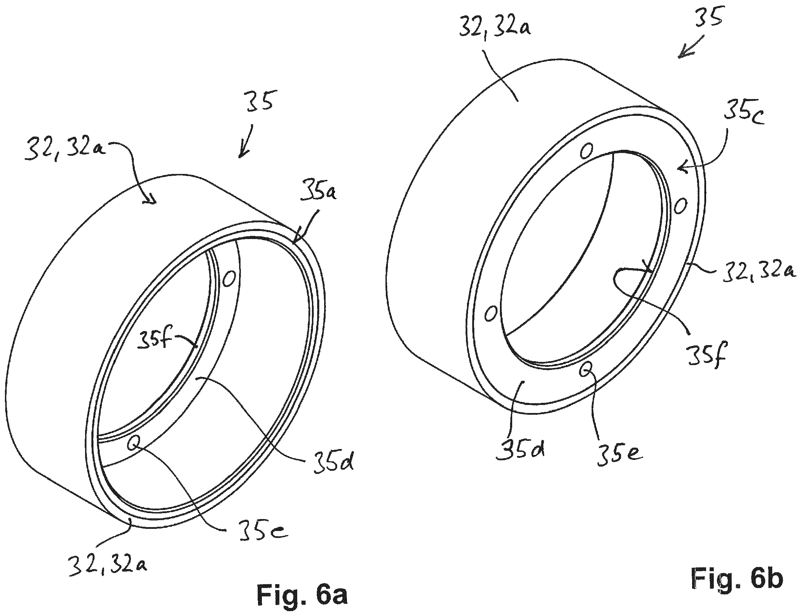

Bei diesen Ausführungsvarianten werden nunmehr zur Erzeugung der Kontakt- und/oder Antriebsabschnitte 27 Hülsen 35 verwendet, wie sie in zwei räumlichen Darstellungen in Figuren 6a und 6b einzeln gezeigt sind, zum einen eher in einer frontseitigen und zum anderen eher in einer rückseitigen Ansicht.

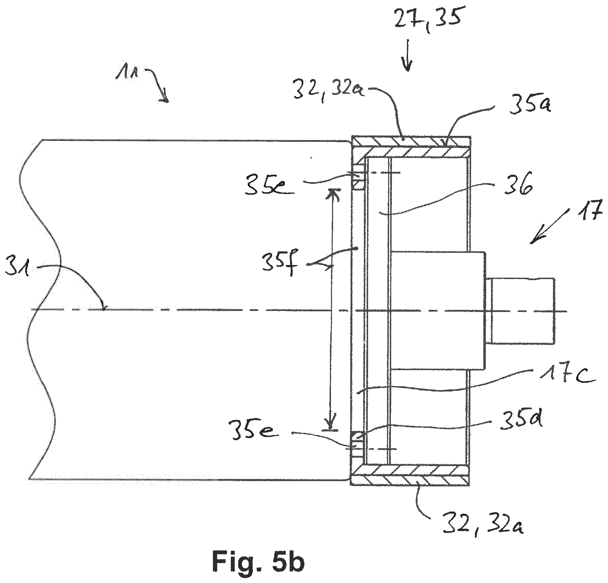

Diese Hülsen 35 sind an dem Walzenkörper 11a der Anpress- oder Nipwalze 11 befestigt, also rotationsfest mit diesem Walzenkörper 11a verbunden und drehen deshalb gemeinsam mit diesem Walzenkörper 11a (Figur 5a oder 5b). Dabei ist in der Darstellung nach Figur 5a und 5b nur die aufgesetzte Hülse 35 im Schnitt dargestellt.

Gemäß Figur 6a und 6b umfasst die Hülse 35 einen zylinderförmigen Hülsenmantel 35a, dessen freier Hülsen-Innendurchmesser 35b gleich oder zumindest geringfügig größer ist als der Außendurchmesser des Walzenmantels 8. Die in Figuren 6a und 6b gezeigte Hülse 35 weist bevorzugt an ihrer einen Stirnseite 35c einen nach innen vorstehenden Montageflansch 35d (nachfolgend teilweise auch Stirnseitenansatz 35d genannt) auf, in welchem Bohrungen 35e eingebracht sind, um die so gebildete Hülse 35 an der Stirnseite 15 der Anpresswalze 11 festzuschrauben. Dadurch ist die so gebildete Hülse 35 drehfest mit der Anpress- oder Nipwalze 11 verbunden.

In den gezeigten Beispielen nach Figur 5a und 5b ist die jeweilige Hülse 35 nicht direkt stirnseitig an der Anpress- oder Nipwalze 11 mittels Schrauben befestigt (obgleich das möglich wäre), sondern unter Verwendung eines Befestigungsringes 36, der ebenfalls mit Bohrungen versehen ist, die mit den Bohrungen 35e im Flansch 35d der Hülse fluchten. Der Flansch 35d ist dann sandwichartig zwischen der Stirnseite 15 der Anpress- oder Nipwalze 11 und dem Befestigungsring 36 aufgenommen und eingeklemmt.

Wie aus den Zeichnungen gemäß Figuren 6a und 6b auch zu ersehen ist, ist der Stirnseitenansatz 35d bevorzugt als ringförmiger Flansch ausgebildet, der eine innen liegende Öffnung 35f aufweist, deren Durchmesser größer ist als der Durchmesser des entsprechenden Achsstummels 17, der diese Öffnung 35f durchragt.

Abweichend vom gezeigten Beispiel ist es natürlich grundsätzlich auch möglich, dass die entsprechende Hülse 35 bei entsprechend angepasster Ausbildung alternativ oder ergänzend auch am Achsstummel 17 der Anpress- oder Nipwalze 11 montiert werden könnte.

An der Außenfläche des Hülsenmantels 35a ist im gezeigten Beispiel das unter Druck komprimierbare Material 32 vorgesehen, beispielsweise als umlaufende Schicht oder Mantelschicht 32a, die in ausreichender Dicke vorgesehen ist, um im Einsatz entsprechend in ausreichendem Maß komprimierbar zu sein. Durch diese Ausbildung wird also der entsprechende Kontakt- und Antriebsabschnitt 27 nunmehr an der bevorzugt sogar nachrüstbaren Hülse 35 ausgebildet. Bei der Darstellung gemäß Figur 6a und 6b überdeckt dabei die vorzugsweise elastisch komprimierbare Mantelschicht 32a die Außenfläche des Hülsenmantels 35a.

Die in Figur 6a und 6b beispielhaft gezeigten Hülsen können bevorzugt in unterschiedlicher Ausrichtung an der Anpress- oder Nipwalze 11 montiert werden.

Bei der in Figur 5a dargestellten Variante sind die topfförmigen Hülsen 35 mit dem zugehörigen Montage-Ringflansch 35d, also allgemein den Stirnseitenansätzen 35d so an der Anpress- oder Nipwalze 11 montiert, dass der den Kontakt- und/oder Anpressabschnitt 27 bildende Hülsenmantel 35a den sich an der Stirnseite der Anpress- und Nipwalze anschließenden Bereich der Walzen übergreift, mit anderen Worten also die entsprechenden Endabschnitte der Anpress- oder Nipwalze 11 in diesen hülsen- oder topfförmigen Aufnahmeraum der Hülse 35 eingreifen.

Da der Außenumfang 27a der auf der Hülse 35 sitzenden Mantelschicht oder Mantellage 32a die Walzenoberfläche 11b nur verhältnismäßig gering überragt, kann die Anpress- oder Nipwalze 11 in dem Bereich, in dem sie in die Hülse 35 eintaucht, mit einem geringeren Außendurchmesser versehen sein. Dieser Außendurchmesser entspricht dem freien Innendurchmesser der Hülse oder ist bevorzugt zumindest geringfügig kleiner, so dass die Hülse bei der Montage problemlos auf den Walzenkörper aufgeschoben und daran befestigt werden kann. Die Stirnseite der Anpress- oder Nipwalze 11 kann dabei ferner noch an ihrer Stirnseite mit einem verjüngten axialen Überstand 17c versehen sein, dessen Außendurchmesser dem Innendurchmesser der Hülse 35 im Bereich des Flansches 35d entspricht oder bevorzugt zumindest geringfügig kleiner ist. Dadurch kann dieser scheibenförmige Überstand 17c in die Öffnung 35f eingreifen oder durchragen.

Die Bemaßung der Außenfläche der Hülse 35 und/oder der darauf ausgebildete Dicke des komprimierbaren Materials 32 ist vergleichbar den anhand der vorausgegangenen Beispiele erläuterten Dimensionsangaben, bei welchen der Kontakt- und/oder Anpressabschnitt 27 integraler Bestandteil oder vorzugsweise integraler Bestandteil der Anpress- oder Nipwalze 11 ist.

Mit anderen Worten umfasst die Anpress- oder Nipwalze 11 in dem Beispiel nach Figur 6a nicht nur einen dreigliedrigen Aufbau (wie anhand von Figur 2 und 3 erläutert), sondern zumindest einen dreigeteilten Aufbau mit einem Walzenkörper 11a, an dem sich gegenüberliegend und in Axialrichtung versetzt die als separate Bauteile ausgebildeten Hülsen 35 anschließen, die im gezeigten Beispiel an entsprechender Stelle an den Stirnseiten der Anpress- oder Nipwalze 11 (lösbar) montiert sind.

Bei der in Figur 5b dargestellten Variante ist grundsätzlich eine ähnliche auszugsweise Längsschnittdarstellung durch eine Anpress- oder Nipwalze 11 in dessen End- oder Stirnseitenbereich gezeigt, und zwar ebenfalls wieder mit daran drehfest montierter Hülse 35. Bei dieser Variante ist jedoch der hohlzylinderförmige Hülsenkörper 35, der teilweise durch den umlaufenden stirnseitigen Ringflansch 35c topfartig ausgestaltet ist, in einer um 180° verdrehter Ausrichtung zu der im Beispiel nach Figur 5a gezeigten Variante an der Anpress- oder Nipwalze 11 montiert. Denn der offene Bereich der Hülse 25 nimmt nicht wie bei der Variante gemäß Figur 5a den stirnseitigen Endbereich der zugehörigen Anpress- oder Nipwalze 11 auf (die hierin eintaucht), sondern ragt von der Stirnseite der Anpress- oder Nipwalze 11 weg. Im Inneren wird die Hülse dann durch die Achsstummel-Anordnung 17 durchragt.

Dadurch ist es möglich, dass die Anpress- oder Nipwalze 11 einen Walzenkörper 11a aufweist, dessen Walzenmantel oder Walzenoberfläche 11b über die gesamte axiale Länge L einen gleichen Durchmesser aufweist.

Bei einer derartigen Ausbildung kann der eigentliche Walzenkörper 11a der Anpress- oder Nipwalze 11 in seiner axialer Längserstreckung kürzer ausgebildet sein, denn er muss nur eine axiale Länge aufweisen, die bevorzugt zumindest geringfügig größer ist als die Arbeitsbreite, also die Breite der zu verarbeitenden Folie oder des zu verarbeitenden Films. Denn der eigentliche Kontakt- und Antriebsabschnitt 27 läuft von dem zugehörigen Walzenkörper weg und überdeckt nicht einen Teil seiner Mantelfläche.

In beiden erläuterten Beispielen ist also auf diesen an der Anpresswalze 11 bzw. dem Walzenkörper 11a stirnseitig befestigten Hülsen 35 das entsprechende unter Druck komprimierbare Anpress- und/oder Kontaktmaterial vorgesehen, welches hohlzylinderförmig mit entsprechender Manteldicke ausgebildet ist, um ab beginnendem Kontakt mit der Walzenoberfläche 7 einer Walze 5, 5' durch den dadurch bewirkten Reibschluss die eigentliche Anpresswalze 11 in Rotation zu versetzen.

Die gesamte Ausbildung kann derart sein, dass die Anpresswalze 11 schon dann einen Druck auf die Folie ausübt, wenn die Anpresswalze 11 beispielsweise erst eine Mantel-Umlaufgeschwindigkeit aufweist, die 50 % und mehr der Mantel-Umlaufgeschwindigkeit der rotierenden Walze 5 entspricht. Vorzugsweise sollte aber die Mantel-Umlaufgeschwindigkeit der Anpresswalze zumindest 60 %, vorzugweise zumindest 70 %, 80 % oder zumindest 90 % oder 95 % und bevorzugt 100 % der Mantel-Umlaufgeschwindigkeit der Walze 5 oder 5' aufweisen, wenn der entsprechende Folienandrückbereich 11c der Anpress- oder Nipwalze 11 die Materialbahn oder Folie F beführt und an die Walze 5, 5' mit einer gewünschten Kraft andrückt die die optimalen vorgegebenen Grenzwerte nicht überschreitet.

Dabei wird angemerkt, dass die Kontakt- und/oder Antriebsabschnitte 27 nicht zwingend Hülsen 35 benötigen. Ausreichend ist vielmehr die Verwendung von walzen-, zylinder- oder z.B. rad- oder reifenförmigen oder -ähnlichen Kontakt- und/oder Antriebsabschnitten 27, die einen festen Bestandteil der Anpresswalze bilden können aber nicht müssen und insoweit auch separate Bauteile darstellen können. Diese vorzugsweise in Form von Hülsen vorgesehenen separaten Anbauteile können unter Ausbildung der Kontakt- und/oder Antriebsabschnitte 27 an der Anpress- oder Nipwalze 11 sogar nachgerüstet werden.

Die Kontakt- und/oder Antriebsabschnitte 27 können also einen festen oder integralen Bestandteil der Anpress- oder Nipwalze 11 darstellen. Diese Kontakt- und/oder Antriebsabschnitte 27 können aber auch wie erläutert sogar als nachrüstbare Bauteile an einer Anpress- oder Nipwalze 11 angebaut werden. Für diesen Fall eignen sich insbesondere die Hülsen 35. Dabei kann wie ebenfalls erwähnt die Verwendung nur eines Kontakt- und/oder Antriebsabschnittes 27 ausreichend sein, d.h. z.B. die Verwendung nur einer Hülse mit nur einem Kontakt- und/oder Antriebsabschnitte 27.

Anhand der weiteren Figuren ist nunmehr eine erfindungsgemäße Nip- oder Anpresswalze 11 gezeigt, deren Antriebseinrichtung nicht indirekt wie anhand des vorausgegangenen Beispiels erfolgt, sondern direkt.

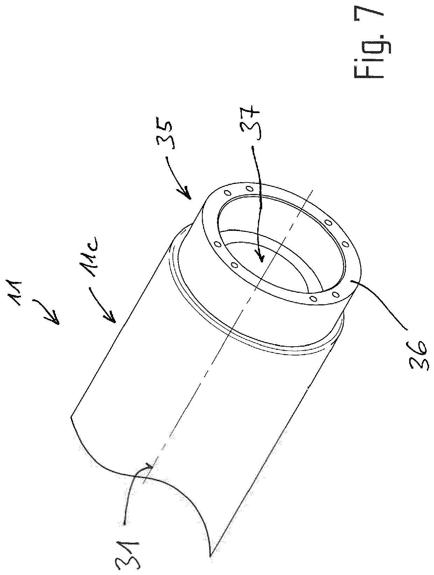

Anhand von Figur 7 ist beispielsweise das eine stirnseitige Ende einer Anpress- oder Nipwalze 11 gezeigt, und zwar mit dem Nipwalzen-Folienandrückbereich 11c, sowie ein darüber stirnseitig überstehender Walzenendabschnitt 35. Bei der räumlichen Darstellung gemäß Figur 7 ist der Walzenhohlraum 37 zu ersehen, der die gesamte Anpress- oder Nipwalze 11 durchsetzt.

In diese Stirnseite 36 des Walzenendabschnittes 35 kann dann ein direkter Antrieb 39 axial eingesetzt und montiert werden, der nachfolgend auch kurz als Direktantrieb 39 bezeichnet wird.

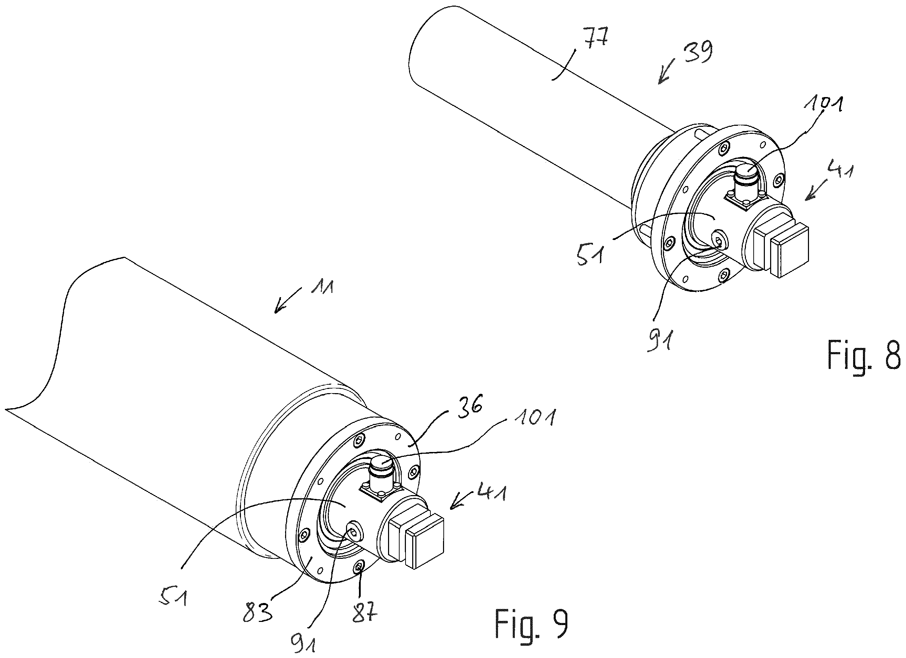

Ein derartiger Direktantrieb ist beispielsweise anhand von Figur 8 zu ersehen.

Auch der weitere Aufbau dieses Direktantriebes wird unter Bezugnahme auf die weiteren Figuren nachfolgend noch erläutert.

Anhand von Figur 9 ist gezeigt, wie der in Figur 8 separat dargestellte Direktantrieb 39 in seiner eingebauten Position an einer Stirnseite 36 der Anpress- und Nipwalze 11 eingebaut ist.

In Figur 8 und 9 ist am stirnseitigen Ende des Direktanriebes 39 der im eingebauten Zustand über den Walzenkörper 11a überstehende Montageabschnitt 41 zu ersehen. An diesem sind verschiedene Anschlüsse ausgebildet. Zu ersehen ist ein Spülluftabschluss 91. An der um 180° gegenüberliegenden Seite kann beispielsweise ein zweiter Spülluftabschluss vorgesehen sein.

Ferner zu sehen ist ein elektrischer Anschluss 101, der als elektrischer Stecker oder Steckeranschluss dienen kann, um hier insbesondere den Elektromotor 64 mit Energie zu versorgen. Dieser Stecker oder Steckeranschluss wird für die ins Innere des Antriebsgehäuses 51 führenden Daten- und Leistungskabel benötigt.

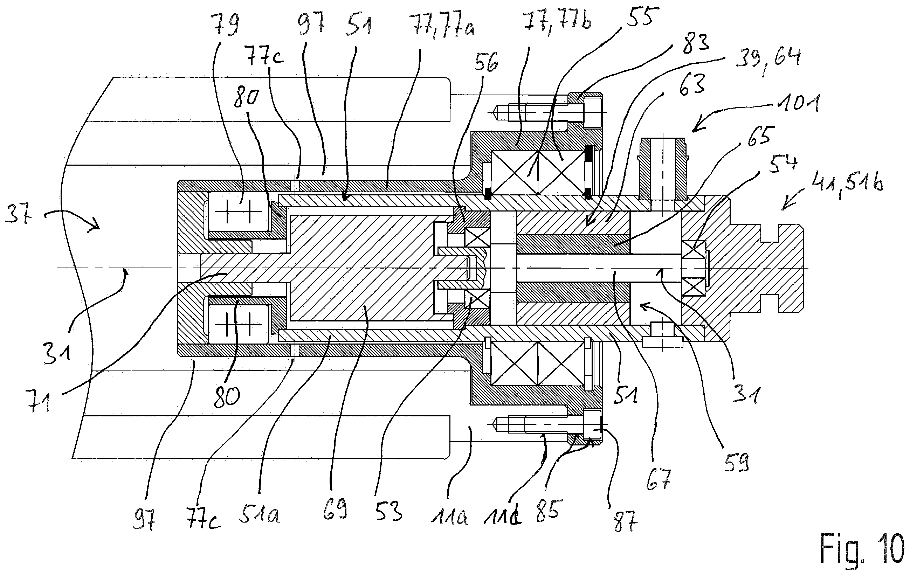

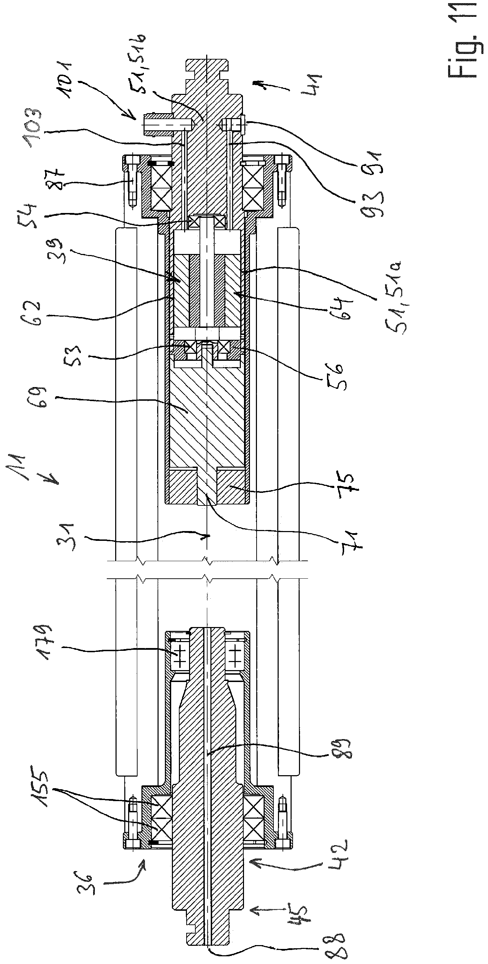

Anhand von Figur 10 ist ein ausschnittsweiser axialer Längsschnitt durch eine Anpress- oder Nipwalze 11 wiedergebeben, wobei der erläuterte Direktantrieb 39 in seiner eingebauten Position rechtsliegend gezeigt ist, also an der dortigen Stirnseite 36 eingeführt und angebaut ist, wobei an der gegenüberliegenden Stirnseite 36 dann ein so genannter Dummy 42 in Form einer Walzenabstützeinrichtung vorgesehen ist, also in Form eines Walzenträgers (gezeigt anhand von Figur 11). Der Dummy 42 kann von seiner Funktion und Außenabmessung vergleichbar dem Direktantrieb 39 ausgebildet sein. Bevorzugt wird der Direktantrieb 39 außenliegend mit einem Montageabschnitt 41 versehen, worüber die Anpress- und Nipwalze an einen Träger montiert werden kann. Der Direktantrieb 39 mit dem Montageabschnitt 41 bildet dann das so genannte Festlager, wohingegen der entsprechende Montageabschnitt 45 an der gegenüberliegenden Stirnseite 36 der Anpress- oder Nipwalze 11 das Loslager bildet, um hier insbesondere bei thermisch bedingten unterschiedlichen Längenausdehnungen einen Ausgleich zur Verfügung zu stellen.

Unter Bezugnahme auf Figur 10 wird nunmehr der Aufbau des Direktantriebes gemäß einem ersten Ausführungsbeispiel anhand einer ausschnittsweisen axialen Schnittdarstellung durch eine Anpress- oder Nipwalze 11 mit eingebauten Direktantrieb 39 beschrieben.

Der Direktantrieb 39 umfasst feststehende und rotierende Teile.

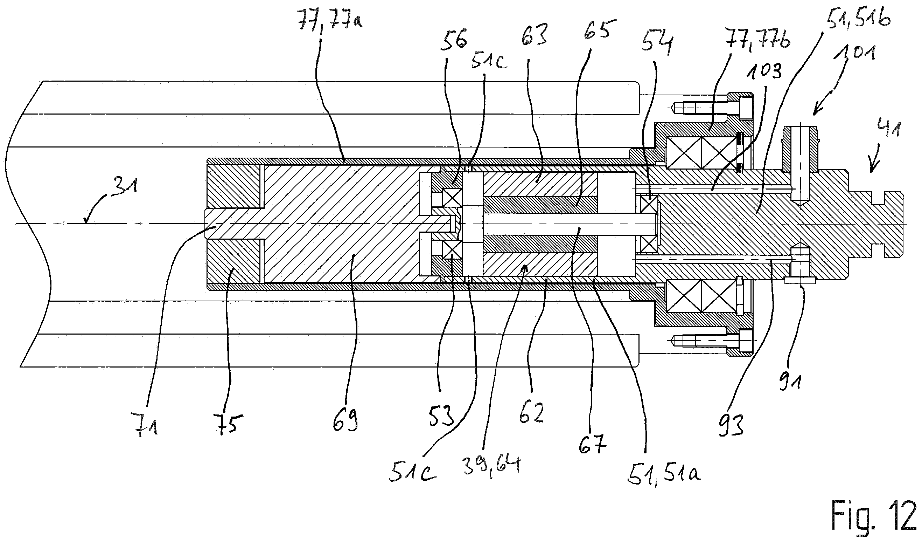

Zu den feststehenden Teilen des Direktantriebes 39 gehört das Antriebsgehäuse 51, welches hohlzylinderförmig gestaltet ist. Es kann wie in Figur 10 dargestellt ist z.B. zweiteilig ausgebildet sein und einen hohlzylinderförmigen Gehäuseabschnitt 51a nach Art einer Gehäusehülse 51a und einen damit fest verbundene stirnseitigen Gehäuseabschnitt 51b nach Art eines Gehäusedeckels 51b umfassen, der den Montageabschnitt 41 bildet. Möglich ist aber auch, dass das Antriebsgehäuse 51 wie in Figur 11 und 12 gezeigt zumindest im Wesentlichen einteilig ausgebildet ist und den hülsenförmigen Gehäuseabschnitt 51a und den stirnseitigen Gehäuseabschnitt 51b umfasst, der den Montageabschnitt 41 bildet.

Dieses Antriebsgehäuse 51 wird an dessen Außenumfang über ein Wälzlager 55 gehalten und gegenüber den nachfolgend noch erörterten außenliegenden rotierenden Teilen des Direktantriebs 39 abgestützt. Als Wälzlager 55 kommen grundsätzlich alle bekannten Ausführungsformen in Betracht. Wie in den Figuren schematisch dargestellt ist, sind an der erwähnten Stelle als Lager zwei axial benachbart zueinander angeordnete Wälzlager 55 untergebracht.

In dem Antriebsgehäuse-Innenraum 59 sitzt konzentrisch zur gesamten Antriebseinheit und damit konzentrisch zu der die Anpress- und Nipwalze 11 axial durchsetzenden Rotations- oder Zentralachse 31 ein Stator 63, der ebenfalls feststehend und nicht rotierend angeordnet ist und letztlich auf der Innenseite des Antriebsgehäuses 51 unmittelbar oder zumindest mittelbar gehalten wird, z.B. wie gezeigt unter Zwischenschaltung eines inneren Hülsenabschnittes 62 (so bei dem nachfolgend erörterten Ausführungsbeispiel nach Figur 12), der bevorzugt Teil des Antriebsgehäuses 51 ist.

Radial innenliegend zu dem Stator 63 ist ein Rotor 65 angeordnet, worüber der erwähnte Elektromotor 64gebildet wird.

Der Rotor 65 sitzt auf einer von der Rotations- oder Zentralachse 31 durchsetzten Antriebswelle 67, die durch den erwähnten Rotor 65 gegenüber dem Stator 63 durch elektrische Energie in Rotation versetzt werden kann. In Axialrichtung von dem stirnseitigen Ende 36 weg verweisend und damit weiter in den Walzenhohlraum 37 hineinragend schließt sich innenliegend in dem Antriebsgehäuse 51 ein Getriebe 69 an, das beispielsweise aus einem Planetengetriebe bestehen kann.

Die Abtriebswelle 71, die aus dem Getriebe 69 in axialer Verlängerung zur Antriebswelle 67 herausgeführt ist, ist über eine im Ausführungsbeispiel nicht gezeigte optional vorhandene Kupplung für einen Winkel-, Radial- und/oder Axialversetz mit einem radialen Drehmomentübertragungsglied 75 verbunden, welches wiederum ein Teil einer topfähnlichen Drehmomentübertragungseinrichtung 77 ist, die außenliegend überringförmige eine Abstufung in einem Flansch- oder Montagering 83 endet, der im eingesetzten Zustand des Direktantriebes an der Stirnseite 36 der Anpresswalze anliegt und diese bevorzugt überdeckt.

Wie aus der Schnittdarstellung gemäß Figur 10 auch zu ersehen ist, ist der gesamte im Antriebsgehäuse 51 untergebrachte Antriebsblock des Direktantriebs 39 von mit dem Walzenkörper 11a verbundenen rotierenden Teilen umgeben, insbesondere in Form der erwähnten topfähnlichen oder hohlzylinderförmigen Drehmomentübertragungseinrichtung 77, die über den so genannten Topfboden in Form des radialen Drehmomentübertragungsglieds 75 mit den innenliegenden, von dem Elektromotor 64 antreibbaren Rotationsgliedern verbunden ist, nämlich vom Rotor 65 beginnend über die Antriebswelle 67, das Getriebe 69 und die Abtriebswelle 71 sowie eine gegebenenfalls optional vorgesehenen und nicht näher gezeigte Kupplung.

Zwischen dem zuletzt genannten Antriebsstrang und der dazu radial beabstandeten topfförmigen oder hohlzylinderförmigen Drehmomentübertragungseinrichtung 77 ist das feststehende Antriebsgehäuse 51 untergebracht, welches stirnseitig über den Walzenkörper 11a nach außen übersteht und dort am stirnseitigen Ende über den ebenfalls feststehenden Montageabschnitt 41 an einer Trageinrichtung montiert und fest verankert werden kann.

Die Abstützung der innenliegenden Rotationsteile (Rotor, Antriebsachse, Getriebe, Antriebsachse und Kupplung, sofern eine Kupplung überhaupt vorgesehen ist) erfolgt über zwei Ring- oder Wälzlager 53 und 54, die bevorzugt in Axialrichtung der Antriebseinheit so versetzt liegen, dass zwischen diesen beiden Wälzlagern 53, 54 der Elektromotor 64 mit dem Stator 63 und dem Rotor 65 zu liegen kommt. Die beiden Wälzlager 53 und 54 stützen dabei die Antriebswelle 67 gegenüber den feststehenden Teilen des Direktantriebs, d.h. direkt oder mittelbar gegenüber dem feststehenden Antriebsgehäuse 51. Das innen liegende Wälzlager 53 ist im gezeigten Ausführungsbeispiel über eine stufenförmige Hülse 56 gegenüber dem feststehenden hohlzylinderförmigen Antriebsgehäuse abgestützt.

Die Abstützung der zu dem Antriebsgehäuse 51 außenliegenden Rotationsteilen (topf- oder hohlzylinderförmige Drehmomentübertragungseinrichtung 77) mit dem zugehörigen ersten zylinderförmigen Abschnitt 77a und dem zweiten stufenförmig erweiterten Abschnitt 77b erfolgt über die erwähnten und anschließend an die Stirnseite 36 vorgesehenen ersten Wälzlager 55 zum einen und über das weiter axial dazu versetzt liegend und damit weiter innen im Hohlraum 37 des Walzenkörpers angeordnete zweite Wälzlager 79, welches näher am Ende des Antriebsgehäuses 51 und damit benachbart zum radialen Drehmomentübertragungsglied 75 angeordnet ist Das zweite Wälzlager 79 kann auch als Doppelwälzlager ausgebildet sein. Zur Übertragung der Abstützkraft zwischen Antriebsgehäuse 51 und dem zweiten Wälzlager 79 dient die Zwischenhülse 80, die fest mit dem Antriebsgehäuse 51 verbunden ist. Diese Zwischenhülse 80 weist einen radialen und axialen Abstand zum Getriebe 69 und einen radialen Abstand zum Drehmomentübertragungsglied 75 auf, damit die Abstützkraft ausschließlich über das Antriebsgehäuse 51, die Zwischenhülse 80 und das Wälzlager 79 auf die topfförmige Drehmomentübertragungseinrichtung 77 geleitet wird, ohne auf das Getriebe 69 zu wirken.

Die topfförmige Drehmomentübertragungseinrichtung 77 ist so gestaltet, dass die feststehenden Teile und insbesondere das Antriebsgehäuse 51 in einem nur geringen radialen Abstand innerhalb der sich drehenden topfförmigen oder hohlzylinderförmigen Drehmomentübertragungseinrichtung 77 zu liegen kommt. Diese topfförmige Drehmomentübertragungseinrichtung 77 gliedert sich wie erwähnt beispielsweise in den sich an den rotierenden Gehäuseboden 75 (Drehmomentübertragungsglied 75) anschließenden ersten Abschnitt 77a und den sich daran in Richtung der Stirnseite 36 anschließenden radial erweiterten Abschnitt 77b an. Mit anderen Worten weist also die topfförmige oder hohlzylinderförmige Drehmomentübertragungseinrichtung 77 eine dem Stirnende 36 näherliegende stufenförmige hohlzylinderförmige Erweiterung 77b auf, die so bemessen ist, dass zwischen der zylinderförmigen Wandung der stufenförmigen Erweiterung 77b und dem feststehenden Antriebsgehäuse 51 das erwähnte Wälzlager 55 untergebracht ist. Wie in den Figuren schematisch dargestellt ist, sind an der erwähnten Stelle zwei axial benachbart zueinander angeordnete Wälzlager 55 untergebracht.

An der Stirnseite 36 der Anpresswalze umfasst dann die Drehmomentübertragungseinrichtung 77 den sich stirnseitig daran anschließenden Montagering 83, der mit mehreren in Umfangsrichtung versetzt liegenden Axialbohrungen 85 versehen ist, in welche von der Stirnseite 36 aus Fixierschrauben 87 in die Stirnseite des Walzenkörpers in dort ausgebildete und mit einem Innengewinde versehene Bohrungen 11d in der Anpress- oder Nipwalze 11 eingedreht werden können. Das Radialmaß des erwähnten Montagerings 83 entspricht dabei bevorzugt dem Radialmaß des überstehenden Walzenabschnittes 35, weisen also bevorzugt den gleichen Durchmesser auf.

Dadurch wird ein Aufbau realisiert, bei welchem bei Zuschalten der feststehenden Teile des Direktantriebes 39 und vor allem feststehenden Antriebsgehäuse 51 mit Stator 63 der dazu radial innenliegende Rotor 65 in Rotation versetzt werden kann, wobei die Rotationsgeschwindigkeit durch das nachfolgende Getriebe 69 dann entsprechend dem Übersetzungsverhältnis verringert wird. Die nachfolgende Abtriebswelle 71 und die dazu nochmals nachfolgenden Drehmomentübertragungseinrichtungen 75 und 76 wird dann über den mit rotierenden Montagering 83 und dessen Fixierung an der Stirnseite des Walzenkörpers der Anpress- und Nipwalze 11 dieser Rotationskörper letztlich in Rotation versetzt.

Durch die Antriebseinheit 51 kann dabei die Rotationsgeschwindigkeit exakt eingestellt, verändert und/oder durch Verwendung einer entsprechenden Steuerungseinrichtung gesteuert werden.

Wie aus der Schnittdarstellung gemäß Figur 10 auch zu ersehen ist, ragt die gesamte Antriebseinheit 51 mit dem feststehenden Antriebsgehäuse 51 und dem daran festmontierten und zum freien Stirnende nochmals weiter vorstehenden Montageabschnitt 41 nur in einer Teillänge der gesamten axialen Baulänge über die Stirnseite 36 der Anpress- und Nipwalze 11 über.

Wie aus Figur 10 ferner zu ersehen ist, ist der Antrieb 51 durch die beiden in Axialrichtung versetzt liegenden Wälzlager 55 und 79 gegenüber den Rotationsteilen der Anpress- und Nipwalze gelagert und abgestützt, wodurch auch ein Verkippen des Elektromotors 64 gegenüber dem Walzenkörper 11a der Anpress- und Nipwalze 11 vermieden wird.

Auch bei Verwendung eines derartigen direkten Antriebs 39 im Gegensatz zu dem anhand der Figuren 2 bis 6b erläuterten indirekten Antriebes lassen sich die gleichen erfindungsgemäßen Vorteile erzielen. Die zu behandelnde Materialbahn und insbesondere Folie kann sehr viel schonender und gleichwohl kontrollierter an eine rotierende Walze oder Reckwalze 5 angepresst gehalten werden.

Ferner ist aus den Figuren 9 bis 12 zu ersehen, dass beispielsweise bevorzugt auf Seiten des Direktantriebes 39 ein Spülventil 91 vorgesehen ist (welches nachfolgend auch als Spül- oder Kühlluftanschluss bezeichnet wird), um das Innere des Walzenkörpers bei Bedarf mit einem gasförmigen Medium wie z.B. Luft zu spülen.

Der Spülluftanschluss 91 oder der Spülventilanschluss 91 umfasst einen radial zur Rotations- oder Zentralachse 31 verlaufenden Leitungsabschnitt. Dieser Leitungsabschnitt mündet bei der Variante nach Figur 10 in dem Antriebsgehäuse-Innenraum 59. Bei der Variante nach Figur 11 und 12 geht dieser Leitungsabschnitt in eine zur Rotations- oder Zentralachse 31 radial versetzt liegende Längsbohrung 93 über, die den Gehäuseabschnitt 51b durchsetzt, der sich an den (den Rotor und den Stator aufnehmenden) Antriebsgehäuse-Innenraum 59 anschließt und den Montageabschnitt 41 umfasst. Der weitere Aufbau und die weitere Funktionsweise der Spüllufteinrichtung auf der Antriebsseite wird anhand eines nachfolgend noch beschriebenen weiteren Ausführungsbeispiels erläutert.

Wie aus der axialen Schnittdarstellung gemäß Figur 11 zu entnehmen ist, ist in dem auf dem bevorzugt als Loslager vorgesehenen Walzenträger 45 (Dummy 42) ebenfalls eine konzentrisch zur Rotations- oder Zentralachse 31 verlaufende zentrale Lüftungsbohrung 89 vorgesehen, die am stirnseitigen Ende des dortigen Montageabschnittes 45 in einem Ausgang 88 endet. Dadurch ist es möglich ein Spülmedium vom Spülluftanschluss 91 kommend durch die gesamte Anpresswalze hindurch strömen zu lassen, um beispielsweise die Anpresswalze entsprechend zu temperieren, insbesondere zu kühlen.

Da der Walzenkörper 11a der Antriebs- und Nipwalze bevorzugt nicht über einen durchgängigen Achskörper gehalten und getragen ist, ist (wie aus der axialen Schnittdarstellung gemäß Figur 11 zu ersehen ist) auf der gegenüberliegenden Seite der Anpress- oder Nipwalze 11 ein entsprechender Montageabschnitt oder Walzenmontageträger 45 vorgesehen, der von seinem Aufbau bezüglich axialer Länge und Durchmesser und der Verwendung zweier in Axialrichtung versetzt liegender Wälzlager beispielsweise mit einem Wälzlager oder Wälzlagerpaar 155 zum einen - vergleichbar dem Wälzlagerpaar 55 - und einem weiteren Wälzlager 179 bezüglich seiner Tragfunktion ähnlich aufgebaut ist zu dem erläuterten Antrieb 51. Er dient quasi nur als Dummy 42 mit außenliegenden Montageabschnitt 45, der dann aber bevorzugt als Loslager ausgebildet ist. Darüber ist also die Anpresswalze auf der zum Direktantrieb 39 gegenüberliegenden Seite gehalten und gelagert und kann gegenüber dem nicht drehenden und feststehenden Dummy 42 frei rotieren.

Anhand von Figur 12 ist ein leicht abgewandeltes Ausführungsbeispiel für die Antriebsseite der Anpresswalze im vergrößerten auszugsweisen axialen Längsschnitt gezeigt, welches grundsätzlich dem schon anhand von Figur 11 gezeigten Ausführungsbeispiels entspricht. Diese Variante weist Vorteile insbesondere bei kleineren Walzendurchmessern auf.

Bei diesem Direktantrieb gemäß Figur 11 und 12 gibt es keine innenliegende Lagerung 79 mehr, die das innere Abstützmoment aufnimmt. Bei der Variante nach Figur 12 ist die Abtriebswelle 71 in Form einer stabilen Getriebeabtriebswelle in einer radial wirkenden Abstützeinrichtung 75 abgestützt und gehalten, die somit als radiales Drehmomentübertragungsglied dient. Diese Abstützeinrichtung 75 kann z.B. als Spülmittel-durchlässige Kupplung ausgebildet sein, die unter Umständen auch innenliegend eine gegebenenfalls abgestufte Lagerhülse aufnehmen kann, in die die erwähnte Getriebeabtriebswelle oder Rotorabtriebswelle dann eingreifend gehalten und abgestützt ist.

Dadurch wird das Biegemoment von der Doppellagerung 55 über die innere Hülse 62 im Bereich des Rotor-/Statorsystems, einen in den Figuren 10 bis 12 links davon liegenden Zwischenring 56 und das Getriebe mit stabiler Getriebeausgangswelle 71 geführt.

Auf der Gegenseite werden die Kräfte über die äußere Hülse, also die hülsenförmige Drehmomentübertragungseinrichtung 77 abgefangen und zur Passhülse am Walzenende geleitet, die als separates Bauteil 77b ausgebildet sein kann oder als stufenförmig erweiterter Abschnitt 77b Teil der Drehmomentübertragungseinrichtung 77 ist.

In Figur 11 und 12 ist ferner der Spülluftanschluss 91 und dessen weiterer Leitungsverlauf dargestellt, nämlich mit einer Längsbohrung 93.

Ferner kann ein zweiter optionaler Anschluss für Spülluft vorgesehen sein, insbesondere für höhere Einsatztemperaturen. Oder aber auch dann, wenn dies aus Gründen des zur Verfügung stehenden Bauraums empfehlenswert ist.

Ein zweiter in Umfangsrichtung versetzt liegender und radial ausgerichteter, also radial umlaufend versetzter Spülluftanschluss kann also optional vorgesehen sein (falls z.B. aus Platzgründen der andere nicht verwendet werden kann). Aufbau, Anordnung und Wirkungsweise kann dabei vergleichbar dem ersten Spülluftanschluss sein.

Dadurch kann die Luft bei dem Ausführungsbeispiel nach Figur 12 z.B. von dem ersten Spülluftanschluss 91, über die Längsbohrung 93, nachfolgend über den Motorraum, über zwei Bohrungen 51c in den Zwischenraum zwischen Getriebe 69 und Außenrohr 77 (Drehmomentübertragungseinrichtung 77) und weiter durch die Abstützeinrichtung oder Kupplung 75 ins Walzeninnere strömen. Die Abstützeinrichtung oder Kupplung 75 verfügt über Spalte und Öffnungen, durch die die Luft austreten bzw. hindurchströmen kann. Wie die Luft am Gegenüberliegenden Ende der Walze abströmen kann ist bereits oben erläutert.

Der erwähnte elektrische Steckeranschluss 101 für die elektrische Leistungsversorgung insbesondere des Elektromotors und für die Datenverbindung insbesondere für die Steuerung kann ähnlich dem Spülluftanschluss zu einer Längsbohrung 103 im Gehäuseanschnitt 51b führen, worüber eine Verbindung zum Antriebsgehäuse-Innenraum 59 bereitgestellt wird.

Im Falle des Ausführungsbeispiels nach Figur 10 kann der vom Spülluftanschluss 91 kommende Luftstrom z.B. über den Durchlassöffnungen aufweisenden Zwischenring 56 zunächst in einen Zwischenraum zwischen dem Getriebe 69 und dem hohlzylinderförmigem Getriebegehäuse 51 bzw. Getriebegehäuse-Abschnitt 51a strömen, um von dort über nicht näher gezeigte Durchlässe oder Bohrungen in den Zwischenraum zwischen der Außenseite des Getriebegehäuses und der Drehübertragungseinrichtung 77 zu gelangen. In dieser hülsenförmigen Drehübertragungseinrichtung 77 sind weitere Durchlässe oder Bohrungen 77c ausgebildet, worüber die Luft weiter in den Walzenhohlraum 37 strömen kann.

Dabei wird an dieser Stelle auch angemerkt, dass die hülsenförmige zu äußerst liegende rotierende Drehübertragungseinrichtung 77 mit ihrer Außenfläche in einem radialen Abstand zur Innenfläche des hohlen Walzenkörpers unter Ausbildung des erwähnten Abstandsraumes 97 liegt, jedenfalls mit dem größten Teil ihrer Länge.

Bei dem Ausführungsbeispiel nach Figur 10 kann der erwähnte elektrische Steckeranschluss 101 für die elektrische Leistungsversorgung insbesondere des Elektromotors und für die Datenverbindung insbesondere für die Steuerung ebenfalls ähnlich zu dem Spülluftanschluss direkt zum Antriebsgehäuse-Innenraum 59 führen.

Zusammenfassend kann also festgehalten werden, dass die Antriebseinheit, also der Direktantrieb 39 nur auf einer Seite des Walzenkörpers vorgesehen ist, und dabei vorzugsweise das Festlager bildet. Theoretisch wäre ein entsprechender Antrieb auch auf beiden Stirnseiten möglich, die vorzugsweise synchron betreibbar sind.

Die Antriebseinheit des Direktantriebs 39 übernimmt dabei nicht nur die Funktion des Antriebs, sondern auch die Funktion der Lagerung und der Schwenkarmverbindung und damit die Anbindung an das Maschinengestell.

Die Loslagerung gegenüberliegend zu den in den Figuren gezeigten einzigen Direktantriebs ist geometrisch, also bzgl. der räumlichen Gestaltung und damit von der Bemaßung her vergleichbar oder dazu ähnlich zu dem Direktantrieb ausgestaltet. Ferner kann hier ein Spülluftauslass vorgesehen sein.

Abschließend wird angemerkt, dass der erfindungsgemäße Anpresswalzenantrieb für die Herstellung unterschiedlichster Folien und Folientypen verwendet werden kann, beispielsweise für die Herstellung von BSF aber auch für die Herstellung anderer Folientypen.

## Patentansprüche

1. Anpresswalzenanordnung, insbesondere für eine Längsreckanlage zum Recken eines Kunststofffilms (F), mit folgenden Merkmalen:
- die Anpresswalzenanordnung umfasst eine Anpresswalze (11) mit einem Walzenkörper oder Walzenkörperabschnitt (11a) mit einer Walzenoberfläche (11b),
- der Walzenkörper oder Walzenkörperabschnitt (11a) weist eine axiale Länge (L_{A}) auf,
- der Walzenkörper oder Walzenkörperabschnitt (11a) umfasst oder bildet zumindest in einer axialen Teillänge (L_{WKA}) einen Nipwalzen-Folienandrückbereich (11c),
- die Anpresswalzenanordnung umfasst ferner eine Antriebseinrichtung für die Anpresswalze (11),
**gekennzeichnet durch die folgenden weiteren Merkmale,**
- die Antriebseinrichtung für die Anpresswalze (11) umfasst oder besteht aus einem Direktantrieb (39),
- die rotierenden Teile des Direktantriebs (39) stehen in Rotationsverbindung mit dem Walzenkörper (11a) oder einem Walzenmantel (8) der Anpresswalze (11),
- der Direktantrieb (39) ist an zumindest einem stirnseitigen Walzenendabschnitt (35) der Anpresswalze (11) lösbar montiert, und
- der Direktantrieb (39) ragt dabei nur in einer maximalen Teillänge von weniger als 50 % über die Stirnseite (36) der Anpresswalze (11) über.

2. Anpresswalzenanordnung nach Anspruch 1, **dadurch gekennzeichnet, dass** der Direktantrieb (39) dabei nur in einer maximalen Teillänge von weniger als 40 %, insbesondere von weniger als 30 % und vorzugsweise von weniger als 20 % seiner gesamten axialen Länge über die Stirnseite (36) der Anpresswalze (11) überragt.

3. Anpresswalzenanordnung nach Anspruch 1 oder 2, **dadurch gekennzeichnet, dass** der Direktantrieb (39) ein in einen Walzenhohlraum (37) der Anpresswalze (11) hineinragendes feststehendes Antriebsgehäuse (51) umfasst, welches über zumindest ein Wälzlager (55) oder zwei axial versetzt zueinander liegende Wälzlager (55, 79) gegenüber den dazu äußeren rotierenden Teilen des Direktantriebes (39) abgestützt ist, wobei das dem stirnseitigen Ende des aus der Anpresswalze überstehenden Direktantriebes (39) näher liegende Wälzlager (55) vorzugsweise als Doppel-Wälzlager ausgebildet ist.

4. Anpresswalzenanordnung nach Anspruch 3, **dadurch gekennzeichnet, dass** in dem Antriebsgehäuse (51) ein gemeinsam mit dem Antriebsgehäuse (51) feststehender Stator (63) angeordnet ist, der einen dazu innenliegenden und in Rotation versetzbaren Rotor (65) umgibt, der mit einer vom Stirnende (36) der Anpresswalze (11) weiter wegverlaufenden Antriebswelle (67) verbunden ist.

5. Anpresswalzenanordnung nach Anspruch 3 oder 4, **dadurch gekennzeichnet, dass** der Rotor (65) nachgeordnet ein Getriebe (69) zur Drehzahlreduzierung im Antriebsgehäuse (51) vorgesehen ist.

6. Anpresswalzenanordnung nach Anspruch 4 oder 5, **dadurch gekennzeichnet, dass** die vom Rotor (65) ausgehende Antriebswelle (67) und/oder die von einem nachfolgenden Getriebe (69) ausgehende Abtriebswelle (71)
a) direkt oder mittelbar über ein radiales Drehmomentübertragungsglied (75) mit einer zylinderförmigen oder hohlzylinderförmigen Drehmomentübertragungseinrichtung (77) verbunden und/oder darüber abgestützt ist, und/oder
b) direkt oder mittelbar über ein Wälzlager (79) gegenübereiner zylinderförmigen oder hohlzylinderförmigen Drehmomentübertragungseinrichtung (77) abgestützt ist,
wobei die Drehmomentübertragungseinrichtung (77) an der Stirnseite (36) mit dem Walzenkörper der Anpresswalze (11) lösbar verbunden ist.

7. Anpresswalzenanordnung nach einem der Ansprüche 1 bis 6, **dadurch gekennzeichnet, dass** der Direktantrieb (39) mit einem außen vorstehenden Montageabschnitt (41) vorzugsweise unter Bildung eines Festlagers versehen ist, und dass an der gegenüberliegenden Stirnseite der Anpresswalze (11) ein in den Hohlraum (37) der Anpresswalze (11) einsetzbarer und stirnseitig überstehender Walzenträger (45) vorgesehen ist, welcher vorzugsweise das Loslager bildet.

8. Anpresswalzenanordnung nach einem der Ansprüche 1 bis 7, **dadurch gekennzeichnet, dass** der Direktantrieb (39) an einem über die Anpresswalze (11) stirnseitig vorstehenden Montageabschnitt (41)
a) zumindest ein Spülluftanschluss (91) aufweist, worüber ein an der gegenüberliegenden Stirnseite der Anpresswalze (11) abströmbares Spülmedium zuführbar ist, und
b) zumindest einen elektrischen Anschluss (101) zumindest zur Energieversorgung des Elektromotors (64) und/oder für die Datenübertragung aufweist.

9. Anpresswalzenanordnung nach Anspruch 8, **dadurch gekennzeichnet,**
- **dass** das Spülventil (91) und/oder der elektrische Anschluss (101) im Montageabschnitt (41)
a) direkt oder
b) zumindest über eine Längsbohrung (93, 103), die in einem stirnseitigen Gehäuseabschnitt (51b) des Antriebsgehäuses (51) ausgebildet ist,
in einem Antriebsgehäuse-Innenraum (59) mündet, und
- **dass** vorzugsweise an dem gegenüberliegenden stirnseitigen Ende der Anpresswalze (11) in dem dort eingesetzten Walzenträger (45) eine Lüftungsbohrung (89) vorgesehen ist, die bevorzugt an dem stirnseitigen Ende des dortigen Montageabschnitts (45) in einer Öffnung (88) nach außen hin endet, worüber von dem Spülventil (91) kommend ein Spülmedium durch die Anpresswalze (11) hindurchführbar ist.

10. Anpresswalzenanordnung nach einem der Ansprüche 3 bis 9, **dadurch gekennzeichnet, dass** das Antriebsgehäuse (51)
a) zweiteilig ausgebildet ist und einen hohlzylinderförmigen Gehäuseabschnitt (51a) nach Art einer Gehäusehülse (51a) und einen damit fest verbundene stirnseitigen Gehäuseabschnitt (51b) nach Art eines Gehäusedeckels (51b) umfasst, der den Montageabschnitt (41) bildet, oder
b) zumindest im Wesentlichen einteilig ausgebildet ist und einen hülsenförmigen Gehäuseabschnitt (51a) und einen stirnseitigen Gehäuseabschnitt (51b) umfasst, der den Montageabschnitt (41) bildet.

11. Reckanlage mit einer Anpresswalzenanordnung nach zumindest einem der Ansprüche 1 bis 10.

## Claims

1. Pressure roller arrangement, in particular for a longitudinal stretching system for stretching a plastics film (F), having the following features:
- the pressure roller arrangement comprises a pressure roller (11) with a roller body or roller body section (11a) with a roller surface (11b),
- the roller body or roller body section (11a) has an axial length (L_{A}),
- the roller body or roller body section (11a) comprises or forms at least in one axial partial length (L_{WKA}), a nip roller film pressing region (11c),
- the pressure roller arrangement further comprises a drive device for the pressure roller (11),
**characterised by the following further features**
- the drive device for the pressure roller (11) comprises or consists of a direct drive (39),
- the rotating parts of the direct drive (39) are in rotational connection with the roller body (11a) or a roller shell (8) of the pressure roller (11),
- the direct drive (39) is detachably mounted on at least one end-face roller end section (35) of the pressure roller (11), and
- the direct drive (39) in this case only protrudes beyond the end face (36) of the pressure roller (11) over a maximum partial length of less than 50%.

2. Pressure roller arrangement according to claim 1, **characterised in that** the direct drive (39) in this case only protrudes beyond the end face (36) of the pressure roller (11) over a maximum partial length of less than 40%, in particular of less than 30% and preferably of less than 20% of its entire axial length.

3. Pressure roller arrangement according to either claim 1 or claim 2, **characterised in that** the direct drive (39) comprises a stationary drive housing (51) which protrudes into the roller cavity (37) of the pressure roller (11), is supported against the outer rotating parts of the direct drive (39) via at least one roller bearing (55) or two mutually axially offset roller bearings (55, 79), the roller bearing (55) closer to the end of the direct drive (39) protruding from the pressure roller preferably being designed as a double roller bearing.

4. Pressure roller arrangement according to claim 3, **characterised in that** a stator (63) which is stationary together with the drive housing (51) is arranged in the drive housing (51), which stator surrounds a rotor (65) which is located therein and can be set in rotation and which is connected to a drive shaft (67) that extends away from the front end (36) of the pressure roller (11).

5. Pressure roller arrangement according to either claim 3 or claim 4, **characterised in that** a gear train (69) for speed reduction in the drive housing (51) is provided downstream of the rotor (65).

6. Pressure roller arrangement according to either claim 4 or claim 5, **characterised in that** the drive shaft (67) proceeding from the rotor (65) and/or the output shaft (71) proceeding from a subsequent gear train (69)
a) is connected directly or indirectly via a radial torque transmission member (75) to a cylindrical or hollow cylinder-shaped torque transmission device (77) and/or is supported thereby, and/or
b) is supported directly or indirectly via a roller bearing (79) against a cylindrical or hollow cylinder-shaped torque transmission device (77),
the torque transmission device (77) being detachably connected at the end face (36) to the roller body of the pressure roller (11).

7. Pressure roller arrangement according to any of claims 1 to 6, **characterised in that** the direct drive (39) is provided with an externally protruding mounting section (41), preferably forming a fixed bearing, and **in that** on the opposite end face of the pressure roller (11) a roller carrier (45) which can be inserted into the cavity (37) of the pressure roller (11) and which protrudes at the end face is provided, which roller carrier preferably forms the floating bearing.

8. Pressure roller arrangement according to any of claims 1 to 7, **characterised in that** the direct drive (39) has, on a mounting section (41) protruding at the end face beyond the pressure roller (11),
a) at least one purge air connection (91) via which a purge medium that can flow off at the opposite end face of the pressure roller (11) can be supplied, and
b) at least one electrical connection (101) at least for supplying energy to the electric motor (64) and/or for data transmission.

9. Pressure roller arrangement according to claim 8, **characterised in that**
- the purge valve (91) and/or the electrical connection (101) in the mounting section (41),
a) directly or
b) at least via a longitudinal bore (93, 103) which is formed in an end-face housing section (51b) of the drive housing (51),
opens into a drive housing interior (59), and
- **in that** a ventilation bore (89) is preferably provided at the opposite end of the pressure roller (11) in the roller carrier (45) inserted there, which bore preferably ends at the end of the mounting section (45) in an opening (88) to the outside, via which a purge medium coming from the purge valve (91) can be passed through the pressure roller (11).

10. Pressure roller arrangement according to any of claims 3 to 9, **characterised in that** the drive housing (51)
a) is designed in two parts and comprises a hollow cylinder-shaped housing section (51a) in the manner of a housing sleeve (51a) and an end-face housing section (51b) fixedly connected thereto in the manner of a housing cover (51b) which forms the mounting section (41), or
b) is formed at least substantially in one piece and comprises a sleeve-shaped housing section (51a) and an end-face housing section (51b) which forms the mounting section (41).

11. Stretching system comprising a pressure roller arrangement according to at least one of claims 1 to 10.

## Revendications

1. Ensemble de rouleaux presseurs, destinés notamment à une installation d'étirage longitudinal destinée à l'étirage d'un film plastique (F), présentant les particularités suivantes :
- l'ensemble de rouleaux presseurs comprend un rouleau presseur (11) présentant un corps ou une section de corps (11a) de rouleau dotée d'une surface (11b),
- le corps ou la section de corps (11a) de rouleau présente une longueur axiale (L_{A}),
- le corps ou la section de corps (11a) de rouleau comprend ou forme, au moins sur une longueur partielle axiale (L_{WKA}), une zone de contact de feuille de rouleau pinceur (11c),
- l'ensemble de rouleaux presseurs comprend en outre un dispositif d'entraînement propre au rouleau presseur (11),
**caractérisé par les particularités supplémentaires suivantes :**
- le dispositif d'entraînement propre au rouleau presseur (11) comprend ou se compose d'un entraînement direct (39),
- les pièces en rotation de l'entraînement direct (39) sont raccordées rotatives au corps de rouleau (11a) ou à un bandage (8) du rouleau presseur (11),
- l'entraînement direct (39) est monté de façon détachable sur au moins une section de face terminale (35) du rouleau presseur (11), et
- l'entraînement direct (39) tel qu'il est ne fait saillie de la face terminale (36) du rouleau presseur (11) que selon une longueur partielle maximale de moins de 50 %.

2. Ensemble de rouleaux presseurs selon la revendication 1, **caractérisé en ce que** l'entraînement direct (39) tel qu'il est ne fait saillie de la face terminale (36) du rouleau presseur (11) que selon une longueur partielle maximale de moins de 40 %, notamment de moins de 30 % et de préférence de moins de 20 % de sa longueur axiale totale.

3. Ensemble de rouleaux presseurs selon la revendication 1 ou 2, **caractérisé en ce que** l'entraînement direct (39) comprend un logement d'entraînement (51) fixe qui pénètre dans une cavité (37) du rouleau presseur (11) et qui est supporté au moyen d'au moins un roulement (55), ou de deux roulements (55, 79) axialement décalés l'un de l'autre, contre les pièces rotatives de l'entraînement direct (39) qui sont extérieures à ce ou ces roulements, le roulement (55) le plus proche de l'extrémité de face terminale de l'entraînement direct (39) faisant saillie du rouleau presseur est de préférence conçu à la manière d'un roulement double.

4. Ensemble de rouleaux presseurs selon la revendication 3, **caractérisé en ce qu'**un stator (63) est agencé dans le logement d'entraînement (51) en étant fixement solidaire dudit logement d'entraînement (51) et en entourant un rotor (65) qui lui est intérieur et peut être mis en rotation, lequel rotor est raccordé à un arbre d'entraînement (67) s'étendant plus avant à partir de la face terminale (36) du rouleau presseur (11).

5. Ensemble de rouleaux presseurs selon la revendication 3 ou 4, **caractérisé en ce qu'**un engrenage (69) est prévu dans le logement d'entraînement (51) en aval du rotor (65) afin d'en réduire la vitesse.

6. Ensemble de rouleaux presseurs selon la revendication 4 ou 5, **caractérisé en ce que** l'arbre d'entraînement (67) sortant du rotor (65) et/ou l'arbre de sortie (71) sortant d'un engrenage (69) qui lui succède sont
a) raccordés directement ou indirectement, par le biais d'un organe de transmission de couple de torsion (75) radial, à un dispositif de transmission de couple de torsion (77) en forme de cylindre plein ou creux et/ou supportés par le biais de celui-ci, et/ou
b) supportés directement ou indirectement par le biais d'un roulement (79) contre un dispositif de transmission de couple de torsion (77) en forme de cylindre plein ou creux ;
ledit dispositif de transmission de couple de torsion (77) étant raccordé au corps de rouleau du rouleau presseur (11) de façon détachable au niveau de la face terminale (36).

7. Ensemble de rouleaux presseurs selon l'une des revendications 1 à 6, **caractérisé en ce que** l'entraînement direct (39) est pourvu d'une section de montage (41) avancée vers l'extérieur, formant ainsi de préférence un palier fixe, et **en ce qu'**il est prévu un support de rouleau (45) susceptible d'être introduit dans la cavité (37) du rouleau presseur (11) et faisant saillie au niveau de la face terminale opposée du rouleau presseur (11), lequel forme de préférence le palier libre.

8. Ensemble de rouleaux presseurs selon l'une des revendications 1 à 7, **caractérisé en ce que** l'entraînement direct (39) présente, au niveau d'une section de montage (41) avancée par rapport à la face terminale du rouleau presseur (11)
a) au moins un raccord d'air de purge (91) par le biais duquel peut être introduit un fluide de purge pouvant sortir au niveau de la face terminale opposée du rouleau presseur (11), et
b) au moins un raccord électrique (101) au moins destiné à l'alimentation électrique du moteur électrique (64) et/ou à la transmission de données.

9. Ensemble de rouleaux presseurs selon la revendication 8, **caractérisé en ce que**
- la vanne de purge (91) et/ou le raccord électrique (101) présents dans la section de montage (41) débouchent dans l'intérieur (59) du logement d'entraînement
a) directement ou
b) au moins par le biais d'un trou longitudinal (93, 103) réalisé dans une section de face terminale (51b) du logement d'entraînement (51),
et
- un trou de purge (89) est prévu, de préférence au niveau de la face terminale opposée du rouleau presseur, dans le support de rouleau (45) qui y est introduit, lequel trou de purge se termine, de préférence au niveau de la face terminale de la section de montage (45) qui s'y trouve, par une ouverture (88) débouchant sur l'extérieur moyennant quoi un fluide de purge venant de la vanne de purge (91) peut traverser le rouleau presseur (11).

10. Ensemble de rouleaux presseurs selon l'une des revendications 1 à 9, **caractérisé en ce que** le logement d'entraînement (51)
a) est conçu en deux pièces et comprend une section de logement (51a) en forme de cylindre creux à la manière d'un tube de logement (51a) et une section de logement (51b) solidaire de cette dernière à la manière d'un couvercle (51b) formant la section de montage (41), ou
b) est conçu au moins sensiblement d'une seule pièce et comprend une section de logement tubulaire (51a) et une section de logement terminale (51b) formant la section de montage (41).

11. Installation d'étirage dotée d'un ensemble de rouleaux presseurs selon l'une au moins des revendications 1 à 10.
